# EUROPEAN PATENT APPLICATION

(11) **EP 4 822 220 A1**
(43) Date of publication of application: **14.10.2026**
(21) Application number: 25169770.2
(22) Date of filing: 10.04.2025
(51) Int. Cl.: F16J 1/00, F15B 15/14, F16J 1/12, F16K 1/48, F16K 31/122

(54) **PISTON DEVICE AND METHOD FOR MANUFACTURING A PISTON DEVICE**

(71) Applicant: ZF CV Systems Europe BV, 1170 Brüssel (BE)
(72) Inventor: SEMENIUK, Maciej, 58-506 Jelenia Gora (PL); OWSIAK, Kamil, 50-506 Wroclaw (PL)
(74) Representative: Copi, Joachim

(57) **Abstract**

The invention relates to piston device (1) for a valve device (30), said piston device (1) comprising:
a piston (2) and a nut (3),
said piston (2) comprising a piston head (4), a piston rod (5) extending from the piston head (4) in an insertion direction (ID) to a piston front end (6), an external thread (8), a first abutment face for stopping an insertion movement in said insertion direction (ID), and a first locking means,
said nut (3) comprising an internal thread (12), a second abutment face for contacting the first abutment face, and a second locking means for interlocking with said first locking means (10),
wherein in an inserted position said external thread (8) being screwed into said internal thread (12) in a first rotation direction (R1), and said first abutment face and said second abutment face contacting each other thereby defining the relative position of the piston (2) in said nut (3), and
wherein in said inserted position said first locking means (10) being interlocked or blocked with said second locking means, thereby preventing a relative rotation of said piston (2) in a second rotation direction (R2) that is reverse to said first rotation direction (R1).

## Description

The invention refers to a piston device for a valve device, a valve device valve with the piston device, and a method for producing said piston device.

Piston devices are used in valve devices to close and open fluid passages between fluid chambers or fluid ports. A piston device generally comprises one or more sealing faces for contact with mating faces, e.g. of a casing, valve device casing or other devices provided in the valve or around to the valve. Piston devices comprise a piston head and a piston rod extending from the piston head in a longitudinal direction along an axis of symmetry. The piston device can often be inserted into a fluid chamber with the piston rod extending through a corresponding part or chamber of the valve device. However, for some purposes, a piston with a specific shape, in particular a thickened end or an end with a larger cross-section at its piston tip, is used to allow fluid control in larger chambers. In some cases, these piston devices cannot be inserted from one side in one direction into the fluid chambers and flow channels. In particular, barbell-type piston devices with larger cross sections at the outer end and a smaller piston rod between the outer ends, between the piston head and the opposite end, are often difficult to insert and mount in a valve device housing with smaller fluid channels.

The provision of a multi-part piston device or piston device with several parts can be problematic, since the forces and torques in the valve device due to fluid flows and vibrations can lead to the disassembly of a multi-part piston device, which can damage the valve device and stop fluid transport.

It is therefore an object of the invention to provide a piston device which allows a high level of safety, in particular a safe and simple manufacturing process with a high level of reliability.

This object is realized by a piston device according to claim 1. Furthermore, a valve device with a piston device, and a method for producing or manufacturing said piston device are provided.

The piston device thus comprises a piston with a piston rod, an external thread, a first abutment face and a first locking means, and is screwed with its external thread into an internal thread of a nut comprising a second abutment face and second locking means. When the piston is screwed into the nut, the first and second locking means engage, and the two abutment faces contact each other and stop the insertion process. The engagement of the first and second locking means results in a locking position which defines the longitudinal position of the nut on the piston and blocks any reverse rotational movement which could lead to unscrewing of the piston from the nut. Depending on how the first and second locking means are designed, it may be possible to rotate the piston briefly in the reverse rotational direction, which is an unscrewing direction, but this will soon be stopped by a first locking face of the first locking means and a second locking face of the second locking means.

The piston device thus allows a simple manufacturing process and guarantees a secure end position, in particular a fixed longitudinal position of the nut with respect to the piston.

The inventive piston device thus provides a piston head and a piston nut on the other end or opposing end, with a piston rod between these ends.

Sealing faces for use in a valve device can be provided along the piston device, in particular on the piston head, the piston rod and on outer faces of the nut.

The inventive valve device can be realized in particular as an engine or a part of an engine, in particular of a pneumatic engine or pneumatic device. Engines often comprise channels and chambers which are connected and opened by pistons. The inventions can provide a piston device with properties customized for the specifications.

In particular, a piston device with a barbell-like shape can be realized, in which a piston rod with a smaller cross section connects the larger piston head and nut.

The invention further provides a method or process for manufacturing the piston device, which is relatively simple to carry out by manufacturing the piston and nut as separate parts in a first step, and then screwing them together in a subsequent step. According to a preferred embodiment, the piston device can be manufactured in a valve device comprising fluid channels and/or fluid chambers, in particular a chamber system with two chambers of larger cross section connected by a channel with smaller cross section. According to a preferred embodiment, the nut is provided in a fluid chamber, and afterwards, in a next step, the piston is inserted through a channel and screwed into the nut, thereby creating a piston device with preferably al barbell shape which cannot be inserted from only one side. The inventive piston device allows a fixed, defined longitudinal position of the nut and piston, and a secure connection without the risk of a disassembly or loosening.

A further benefit of the invention is the provision of two parts made of different materials. In particular, the piston can be made of a first material, particularly a plastic material, and the nut can be made of a second material, in particular another plastic material or metal. Such an embodiment allows to use different materials for piston and nut. For example, a nut made of metal can be used together with a piston made of plastic, where the metal surface of the nut can be better coated with specific materials and/or in specific processes that are in particular provided for metal surfaces, without exposing the piston to these materials or processes.

In particular, the metal nut or a nut with a metal coating can be vulcanized on its outer face, thereby providing a rubber coating forming a sealing material or sealing surface. The piston device thus allows the provision of several sealing faces for different uses or different positions, using different sealing materials. In particular, a piston made of plastic material can be combined with a sealing part provided with a vulcanized rubber coating.

Thus, the invention also relates to a valve device with at least one piston device.

The first locking means is preferably located at the tip or front end of the piston; the second locking means is preferably located in the nut or in a through hole of the nut.

Advantageous embodiments for the locking means are a latch-teeth combination and a serration-snap combination, which allow a smooth insertion process and a high security against an unscrewing in the reverse rotation direction, with a relatively simple design of the first and second locking means.

The invention is hereinafter explained in more detail with reference to the accompanied drawings, in which:
- Fig. 1: is a side view of a piston device according to a first embodiment of the invention;
- Fig. 2: is a perspective view of the embodiment of figure 1;
- Fig. 3: a perspective view of the nut;
- Fig. 4: a top view of the nut;
- Fig. 5: a top view of the piston, with latch means;
- Fig. 6: a perspective view of the top part of the piston, with latch means;
- Fig. 7: a bottom view of the engaged piston device;
- Fig. 8: an enlarged view of figure 7;
- Fig. 9: is a perspective view of a second embodiment of the invention;
- Fig. 10: is a perspective bottom view of the nut of the second embodiment;
- Fig. 11: is a perspective top view of the end part of the piston of the second embodiment;
- Fig. 12: is a bottom view of the end part of the piston of the second embodiment
- Fig. 13: is an enlarged view of the engaged piston device of the second embodiment; and
- Fig. 14: an embodiment of the piston device provided in a valve device.

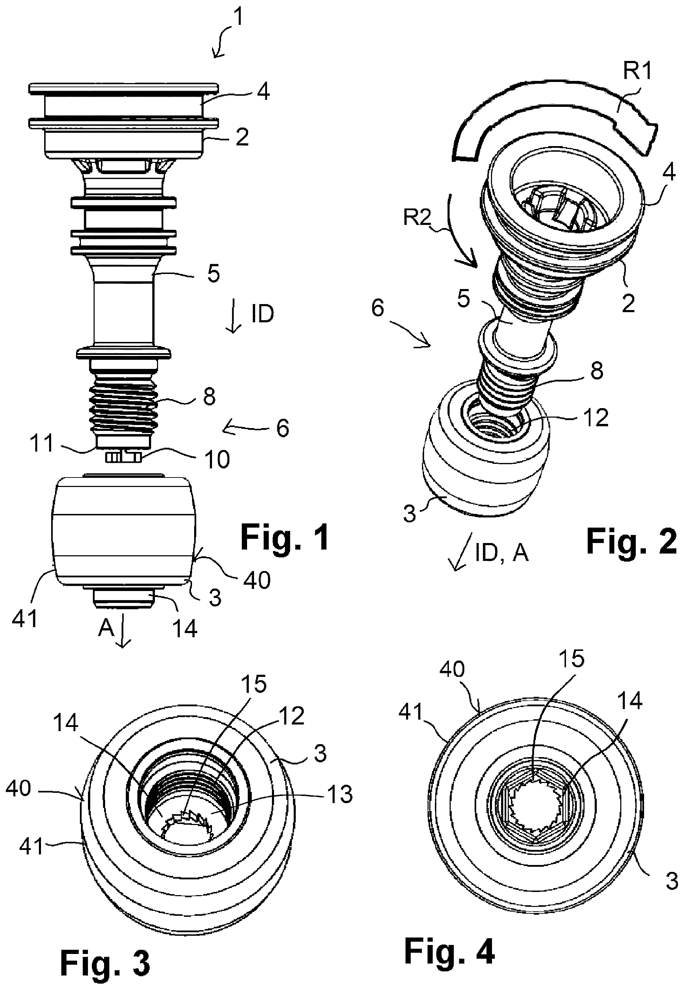

The first embodiment of figures 1 to 8 shows a piston device 1 with a latch locking.

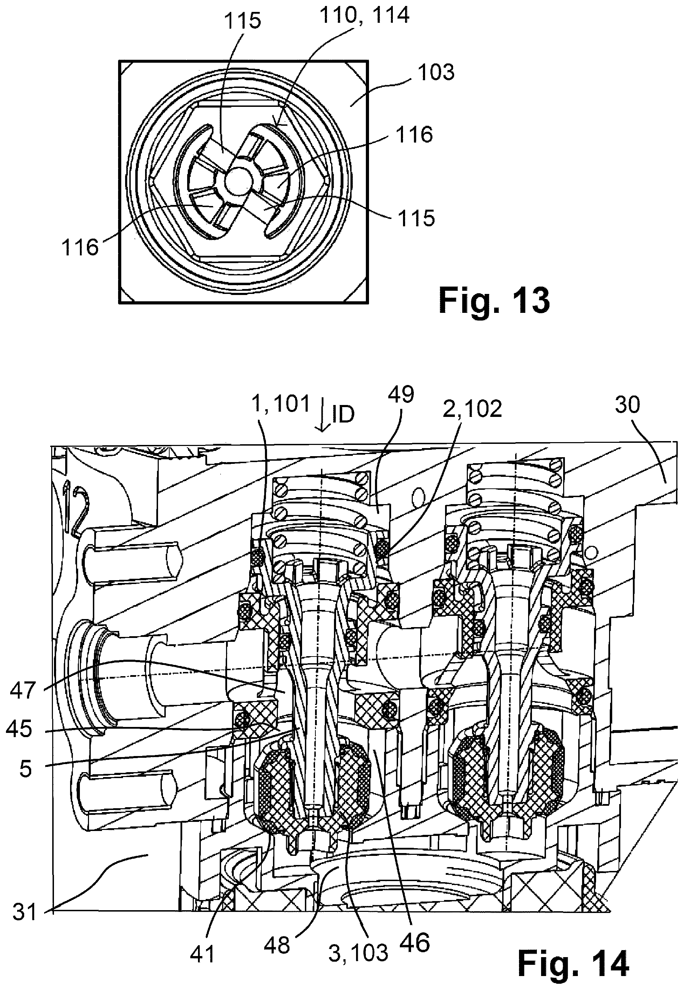

The piston device 1 comprises a piston 2 and a nut 3. The piston 2 comprises a piston head 4 with enlarged cross-section and a piston rod 5 extending from the piston head 4 in an insertion direction ID to a front end 6 of the piston 2. The front end 6 comprises an external thread 8 and, at the very top, a latch means 10 acting as a first locking means; in addition, a first abutment face 11 for a mechanical stop of the insertion process of the piston 2 into the nut 3. The piston 2 comprises further details for its function in a valve device, which will be described below with reference to fig. 14.

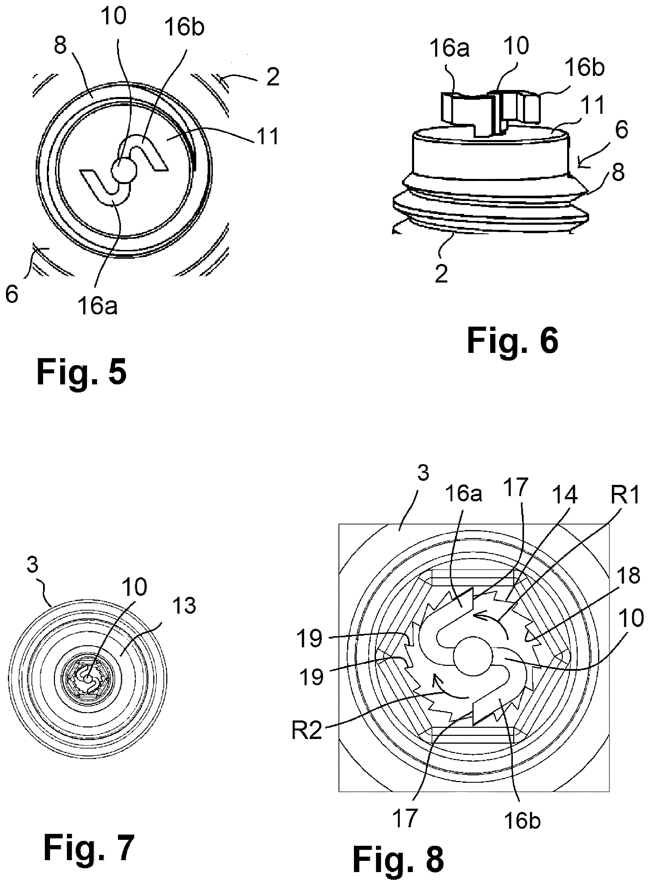

The nut 3 comprises an internal thread 12 for receiving the external thread 8 of the piston 2, a toothed area 14, acting as second locking means for receiving the latch means 10, as can be seen in fig. 7 and 8 where the piston 2 and nut 3 are engaged. In addition, the nut comprises a second abutment face 13 for contacting the first abutment face 11 of the piston 2.

The toothed area 14 thus serves as counter-means for the latch means 10. For this purpose, the toothed area 14 comprises a plurality of teeth 15 extending in circumferential direction around the toothed area 14. Each tooth 15 has an asymmetrical shape, for example a triangular shape, which allows a sliding process of the latch means 10 in a first rotational direction R1, see fig. 2, for the insertion process, thereby locking the latch means 10 in the toothed area 14. The latch means 10 of the shown embodiment comprises two latches 16a, 16b, for example bow-shaped, with an end face 17.

Figures 7 and 8 show the insertion process, where the piston 2 is turned in a first rotational direction R1, which is the insert rotational direction, thereby screwing the external thread 8 into the internal thread 12, This insertion process is stopped by a contact of the first abutment face 11 of the piston 2 on the second abutment face 13 of the nut 3. The two latches 16a, 16b of the latch means 10 slide on the teeth 15 of the toothed area 14. However, a reverse rotation in a reverse rotational direction R2, which is the unscrewing direction, is blocked, at least after a short rotation, when the first locking faces 17 of the latch means 10, which is formed as end faces of the latches 16a, 16b, contact second locking faces 19 of the toothed area 14, wherein the second locking faces 19 are formed as steeper faces of the triangular tooth 15. Each tooth 15 being made with e.g. a triangular shape, with a locking face 19 and an inclined sliding face 18 which allows a sliding movement of the latches 16a, 16b. Thus, when unscrewing the piston 2 in the reverse rotational direction R2, each first locking face 17 contacts a second locking face 19 of the next tooth 15, respectively, thereby stopping the second rotational movement. An unscrewing or unlocking of the locked connection of the piston 2 in the nut 3 is therefore not possible, at least not without destroying a part of the piston 2 and/or the nut 3.

The latch means 10 can comprise one, two or more, for example four latches 16a, 16b. If only one latch 16a is used, an asymmetrical load on the piston 2 could occur during rotation in reverse direction R2. However, the depicted embodiment allows a smooth insertion process with a secure, symmetrical locking in the reverse direction R2.

The combination of these features thus allows a simple, smooth insertion process with secure, undetachable locking of piston 2 and 3, with a specified position in insert direction ID, without risk of unscrewing or loosening of the nut 2.

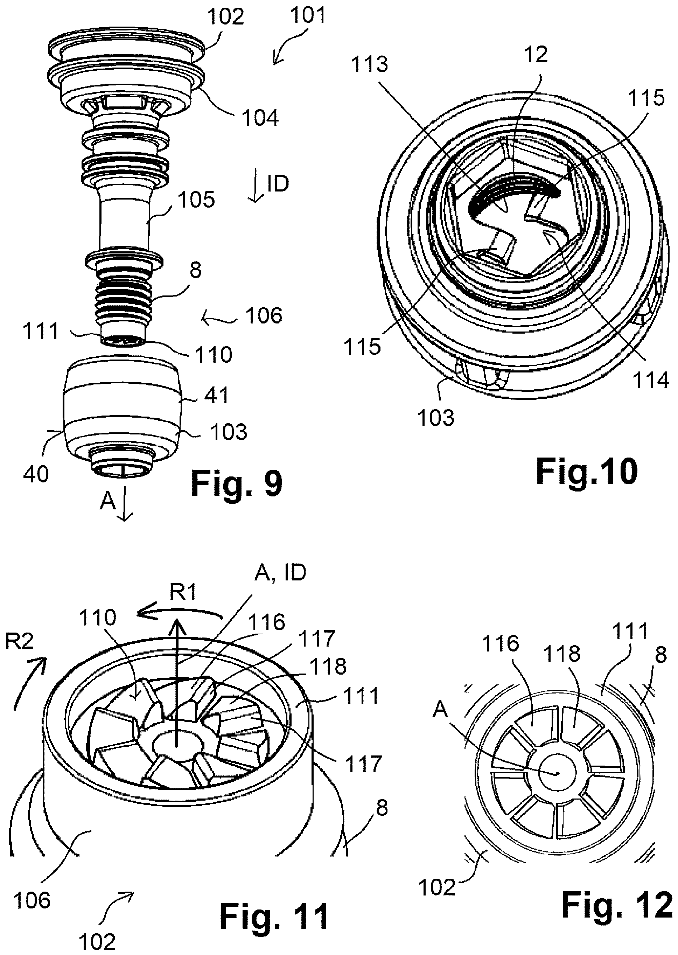

Figures 9 to 13 show a second embodiment of a piston device 101. The piston device 101 again comprises a piston 102 and a nut 103, wherein the piston 102 comprises an external thread 8 and a first abutment face 111, and the nut 103 comprises an internal thread 12 and a second abutment face 113 for contacting the first abutment face 111. In the second embodiment, the locking is realised by a snap-fit, in particular as a serration - snap fit. The piston 102 comprises, at its piston front end 106, a serration area 110 with a plurality, for example eight, of teeth 116 extending in the insertion direction ID, each tooth 116 comprising an inclined, sloping sliding face 118 and a vertical locking face 117. The nut 103 comprises a snap means 114 as a second locking area means, the snap means 114 comprising one or more elastic snap hooks 115; in the illustrated embodiment, the snap means 114 comprises two elastic snap hooks 115.

The piston 101 is again screwed with its external thread 8 into the internal thread 12 of the nut 103 until the insertion process in the insertion direction ID is stopped by the first abutment face 111 of the piston 102 coming in contact with the second abutment face 113 of the nut 103. During this rotational or helical movement, the snap hooks 115 slide on the sliding faces 118 of the snap means 114. When the piston 102 is afterwards rotated in reverse rotational direction R2 in order to unscrew it from the nut 103, each snap hook 115 engages and locks with a locking face 117 of a piston tooth 116 and interlocks with it, thereby preventing a further reverse rotational movement and unscrewing.

Both embodiments can be realized with a reverse construction of the first and second locking means. Thus, the first locking means 10, 110 of the piston 2, 102 can be interchanged or exchanged with the second locking means 14, 114 of the nut 3, 103.

Thus, both embodiments allow a simple insertion process with a rotation during tightening and a self-locking at the end of the screwing operation, and prevent an unscrewing and disassembly by locking the two respective locking means.

The piston devices 1, 101 with the pistons 2, 102 and the corresponding nut 3, 103 thus allow a specific barbell shape with a piston head 4, 104 with a larger cross-section, a nut 3, 103, with a larger cross section, and a piston rod 5 between the piston head 4, 104, and the nut 3, 103, wherein the piston rod 5 can be designed with a significantly smaller cross section. This piston device 1, 101, can be used in particular in valve devices or valve device housings, which only allow an insertion process from one direction.

Furthermore, the nut 3, 103 can be made of a specific material which allows a coating or plating process with a sealing layer 41 of e.g. rubber or plastic; in particular, the nut can be made of a metal (like steel or aluminium) or plastic, with an outer surface 40 that allows a vulcanization with a rubber layer 41. The piston 2, however, can be made from a different material, e.g. plastic, which has other advantages; in particular, a plastic material allows the latches 16a, 16b to bend on the sliding face 118 of the nut 3 due to the elastic properties of the plastic.

In the second embodiment, the nut 103 can be made of plastic which allows to bend the elastic snap hook 115 on the nut 103..

The material of the parts or elements of the piston devices 1 and 101 can thus be chosen independently of each other, as is preferred in the embodiments.

Fig. 14 shows such an embodiment:
In Fig. 14 a valve device 30 comprises a valve device housing 31 with spaces, channels and through-holes, in particular for a fluid stream of gas or air. In Fig. 11, two piston devices 1 are provided for controlling a fluid flow between several channels. The piston 1 can be provided with suitable features, in particular for its movement in the valve device block, in particular with sealing rings. The nut 3 is provided with a sealing layer 41, for example a rubber or plastic material, which contacts relevant sealing surfaces or sealing areas of the motor block. As can be seen from Fig. 11, the nut 3 is accommodated in a larger first chamber 46, and the piston rod 5 extends through a smaller channel area 47 to a second, upper chamber 49. The nut 3 opens or closes a fluid passage 45 between e.g. a channel 47 and the chamber 46, and between the chamber 46 and the outlet area 48 as well. As can be seen from Fig. 14, the barbell shaped piston device 1 cannot be inserted from one direction. The invention therefore allows a manufacturing process, in which the nut 3 is first provided in the lower space or lower chamber, and then the piston 1 is inserted from above through the chamber 49 and the channel area 47, thereby screwing the piston 3 into the nut 3 thereby forming the piston device 1.

### List of reference numerals (Part of the description)

- 1: piston device
- 2: piston
- 3: nut
- 4: piston head
- 5: piston rod
- 6: piston front end
- 8: external thread

- 10: latch means, first locking means of the piston 2
- 11: first abutment face of the piston 2
- 12: internal thread
- 13: second abutment face of the nut 3
- 14: toothed area, second locking means of the nut 3
- 15: tooth of the toothed area 14
- 16a, 16b: latches of the piston head 4
- 17: first locking face, of the latch means 10
- 18: sliding face of the tooth 15
- 19: second locking face of the tooth 15

- 30: valve device, for example engine valve
- 31: valve housing

- 40: outer surface of the nut 3, 103
- 41: layer on the outer surface 41, in particular rubber layer

- 45: fluid passage
- 46: first chamber
- 47: channel area
- 49: second, upper chamber

- 101: piston device
- 102: piston
- 103: nut
- 104: piston head
- 105: piston rod
- 106: piston front end

- 110: serration area, first locking means of the piston 102
- 111: first abutment face
- 113: second abutment face 113 of the nut 103
- 114: snap means, second locking means of the nut 3
- 115: elastic snap hook of the snap means 114
- 116: piston teeth
- 117: locking face of a piston teeth 116 of the serration area 110
- 118: sliding face
- 101: piston device
- R1: first rotational direction, screwing direction
- R2: reverse rotational direction, unscrewing direction

## Claims

1. Piston device (1, 101) for a valve device (30), said piston device (1, 101) comprising:
a piston (2, 102) and a nut (3, 103),
said piston (2, 102) comprising a piston head (4), a piston rod (5) extending from the piston head (4) in an insertion direction (ID) to a piston front end (6, 106), an external thread (8), a first abutment face (11, 111) for stopping an insertion movement in said insertion direction (ID), and a first locking means (10, 110),
said nut (3, 103) comprising an internal thread (12), a second abutment face (13, 113) for contacting the first abutment face (11, 111), and a second locking means (14, 114) for interlocking with said first locking means (10, 110),
wherein in an inserted position said external thread (8) being screwed into said internal thread (12) in a first rotation direction (R1), and said first abutment face (11) and said second abutment face (17) contacting each other thereby defining the relative position of the piston (2, 102) in said nut (3, 103), and
wherein in said inserted position said first locking means (10) being interlocked or blocked with said second locking means (12, 112), thereby preventing a relative rotation of said piston (2, 102) in a second rotation direction (R2) that is reverse to said first rotation direction (R1).

2. Piston device (1, 101) according to claim 1, wherein said first locking means (10, 110) is positioned at a piston front end (6, 106) of said piston (2, 102) in said insertion direction (ID).

3. Piston device (1, 101) according to one of the preceding claims, wherein said nut (3, 103) comprises an outer surface (40) with a coated sealing layer (41) for contacting and sealing at least one fluid passage (45) in a valve device (30).

4. Piston device (1, 101) according to claim 3, wherein said sealing layer (41) is vulcanized on said outer surface (40).

5. Piston device (1, 101) according to one of the preceding claims, wherein said nut (3, 103) and said piston (2, 102) are made of different materials, e.g. the piston (2,102) being made of plastic and the nut being made of metal.

6. Piston device (1, 101) according to one of the preceding claims, wherein said nut (3, 103) and said piston head (4, 104) comprise a larger cross section or larger diameter than said piston rod (5, 105), in particular with a barbell shape of said piston device (1, 101).

7. Piston device (1, 101) according to one of the preceding claims, wherein said first locking means (10, 110) comprises at least two locking faces (17, 117), and
wherein said second locking means (14, 114) comprises second locking faces (19, 119),
said first locking faces (17, 117) and said second locking faces (19, 119) contacting each other and blocking a rotation in said second rotation direction (R2).

8. Piston device (1, 101) according to claim 7, wherein one of said second locking means comprises at last two locking faces and the other of said locking means comprises a plurality of locking faces distributed in a circumferential direction, to provide an engagement of the first and second locking means in several rotational positions.

9. Piston device (1) according to one of the preceding claims,
said first locking means (10) and said second locking means (14) forming a latch - teeth locking,
wherein said first locking means and/or said second locking means (14) comprises a toothed area (14) with a plurality of teeth (15) provided in a circumferential or rotational direction around a symmetry axis (A) of said piston device (1), and said other locking means (10) comprises at least one latch (16a, 16b), preferably two latches (16a, 16b) for engaging the teeth (15),
wherein each of said teeth (15) comprises a sliding face (18) for a sliding movement of said at least one latch (16a, 16b) in said rotational direction (R1) and a locking face (19) for blocking said reverse rotational movement.

10. Piston device (101) according to one of claims 1 to 8,
said first locking means (110) and said second locking means (114) forming a snap - serration locking,
wherein said first locking means (110) and/or said second locking means comprises a serration area (110) with a plurality of teeth (116) provided in a circumferential or rotational direction around a symmetry axis (A) of said piston device (101),
said plurality of teeth (116) protruding along said symmetry axis (A),
wherein said other locking means (114) comprises at least one snap hook (115), preferably two snap hooks (115) for engaging said teeth (116),
wherein each of said teeth (15) comprises a sliding face (18) for a sliding movement of said at least one latch (16a, 16b) in said rotational direction (R1) and a locking face (19) for blocking said reverse rotational movement.

11. Piston device (1, 101) according to one of the preceding claims, wherein an unscrewing and/or an extracting of said piston (2, 102, 102) out of said nut (3, 103) in said reverse insertion direction is not possible without destroying said locking means (10, 110; 14, 115).

12. Piston device (1, 101) according to one of the preceding claims, wherein said piston (2, 102) is hollow, thereby allowing a fluid transport through said piston (2, 102) and said nut (3, 103) in said insertion direction (ID).

13. Engine (30) of a vehicle, in particular a commercial vehicle, said engine (30) comprising a motor block (31) with fluid chambers (46, 49) and fluid channels (45, 47), in particular air chambers (46, 49) and air channels (47) or air passages (45),
said piston device (1, 101) being displaceable provided in said motor block (31) in said insertion direction (ID), in particular with a spring load,
said piston (2, 102, 102) blocking or opening at least one fluid channel (47) between a first fluid chamber (46) a second fluid chamber or a further fluid channel,
wherein said nut (3, 103) comprise a sealing coating (41), in particular made of plastic or rubber, on its outer surface (40), for contacting sealing faces of said motor block (31) for said closing of said fluid channel (47).

14. Method of manufacturing a piston device (1, 101) according to one of the preceding claims, comprising the steps:
Providing said nut (3, 103),
Introducing said piston (2, 102, 102) in said insertion direction (ID) into said nut (3, 103) by screwing said piston (2, 102) in said first rotational direction (R1) with its external thread (8) into said internal thread (12) of said nut (3, 103),
wherein during said rotational insertion movement said first locking means (10, 110) engaging said second locking means (14, 115) and locking in said second locking means (14, 115),
said insertion motion being stopped by contact of said first abutment face (11, 111) of said piston (2, 102) on said second abutment face (13, 113) of said nut (3, 103).

15. Method according to claim 14, wherein said piston device (1, 101) is provided in a valve device casing (31) of a valve device (30),
wherein said nut (3, 103) is positioned in a first fluid chamber (46), and
said piston (2, 102) is introduced through a smaller channel (47) and screwed into said nut (3, 103).
